# EUROPÄISCHE PATENTANMELDUNG

(11) **EP 0 676 273 A2**
(43) Veröffentlichungstag der Anmeldung: **11.10.1995**
(21) Anmeldenummer: 95105101.0
(22) Anmeldetag: 05.04.1995
(51) Int. Cl.: B29C 65/34, F16B 5/08, E04B 1/66

(54) **Verbindungsanordnung für Kunststoffplatten**

(30) Priorität: 08.04.1994 DE 4412083
(71) Anmelder: Friatec Aktiengesellschaft Keramik- und Kunststoffwerke, D-68229 Mannheim (DE)
(72) Erfinder: Lehmann, Jörg Dipl.-Ing, D-01169 Dresden (DE)
(74) Vertreter: Klose, Hans, Dipl.-Phys.

(57) **Zusammenfassung**

In einer Verbindungsanordnung für Kunststoffplatten (8, 9) oder Kunststoffolien sind diese im Bereich ihrer einander zugeordneten Längskanten (10, 11) durch Schweißen miteinander verbindbar. Die Verbindungsanordnung soll dahingehend weitergebildet werden, daß bei geringem Montage- und Fertigungsaufwand eine funktionssichere und dichte Schweißverbindung herstellbar ist. Es wird vorgeschlagen, daß die Längskanten (10, 11) zwischen eine Klemmleiste (2) und einen Klemmkörper (6) eingeklemmt sind und daß die Klemmleiste (2) ein mit dem Klemmkörper (6) korrespondierendes Rastelement (4) aufweist, welches zwischen den beabstandet zueinander angeordneten Längskanten (10, 11) hindurch in den Klemmkörper (6) eingreift. Die Klemmleiste (2) enthält wenigstens einen Heizdraht (38, 39) zum Verschweißen der Klemmleiste (2) mit den beiden Kunststoffplatten (8, 9) bzw. den Kunststoffolien.

## Beschreibung

Die Erfindung bezieht sich auf eine Verbindungsanordnung für Kunststoffplatten oder Kunststoffolien gemäß den im Oberbegriff des Patentanspruchs 1 angegebenen Merkmalen.

Aus der DE 40 23 542 A1 ist eine derartige Verbindungsanordnung für Kunststoffplatten bekannt, welche als Betonschutzplatten zur Auskleidung von Betonbauteilen dienen, beispielsweise Betonrohren, Ortbeton, Bauwerke oder Stahlbetonfertigteilen. Die Platten bestehen aus einem thermoplastischen Kunststoff und enthalten auf der einen Oberfläche Stege zur Verankerung in Beton. Zur Verbindung der Kunststoffplatten sind Klemmleisten vorgesehen, welche an den Längsrändern der Kunststoffplatten befindliche Stege übergreifen. Nach dem Einbetonieren und Abnehmen der Verschalung werden die Kunststoffplatten an ihren Längskanten verschweißt. Dies erfolgt mittels eines Schweißgerätes und eines Schweißdrahtes, welcher in die zwischen den Längskanten der Kunststoffplatten vorhandene Nut eingelegt, mit den Längskanten zusammen erwärmt und somit verschweißt wird. Das Einbringen einer derartigen Schweißnaht ist mit einem nicht unerheblichen Zeitaufwand verbunden, zumal das Schweißgerät und der Schweißdraht nur mit einer endlichen, nicht allzu großen Geschwindigkeit an den Längskanten entlang bewegt werden können. Ferner muß die Schweißnaht mit großer Genauigkeit und vor allem durch qualifiziertes Personal hergestellt werden, um Fertigungsfehler möglichst auszuschließen, wodurch ein entsprechender wirtschaftlicher Aufwand erforderlich ist.

Aus der DE 39 27 289 C2 ist ein Verfahren zum Verschweißen von thermoplastischen Kunststoffbahnen bekannt. Hierbei werden zwischen die überlappenden Ränder der Kunststoffbahnen elektrische Heizdrähte eingebaut. Mittels Wärme und Druck werden die überlappenden Ränder der Kunststoffbahnen miteinander verschweißt, wobei der Druck mit Hilfe einer Kies- oder Sandauflast erzeugt wird. Desweiteren können die überlappenden Ränder zusammen mit den elektrischen Heizdrähten zwischen einen im Prinzip U-förmigen Preßrahmen einer Preßvorrichtung zusammen mit einem Preßschlauch gelegt werden. Durch Einleitung von Druckmittel in den Preßschlauch kann der zum Elektroschweißen erforderliche Anpreßdruck aufgebracht werden. Die Qualität der Schweißverbindung wird bekanntlich entscheidend vom Anpreßdruck während des Schweißens bestimmt, so daß zusätzliche Maßnahmen notwendig sind, um reproduzierbare Verhältnisse unter den verschiedensten Arbeitsbedingungen zu gewährleisten.

Hiervon ausgehend liegt der Erfindung die Aufgabe zugrunde, die Verbindungsanordnung der eingangs genannten Art dahingehend weiterzubilden, daß bei geringem Montage- und Fertigungsaufwand eine funktionssichere und dichte Schweißverbindung hergestellt werden kann. Die Herstellung der Schweißverbindung soll einen geringen Zeitaufwand erfordern, wobei definierte Verhältnisse bei der Vorbereitung und Durchführung der Verschweißung vorhanden sein sollen.

Die Lösung dieser Aufgabe erfolgt gemäß den kennzeichnenden Merkmalen des Patentanspruchs 1.

Die vorgeschlagene Verbindungsanordnung ermöglicht bei einfacher Handhabung eine schnelle und funktionssichere Verschweißung der Platten oder Folien aus Kunststoff. Es ist eine Klemmleiste mit wenigstens einem Heizdraht vorhanden, wobei diese Klemmleiste die Längskanten der zu verbindenden Kunststoffplatten oder Folien überlappend angeordnet wird. Zwischen der Klemmleiste und einem Klemmkörper sind die Längskanten der Platten oder Folien eingeklemmt, wobei die Klemmleiste und der Klemmkörper mittels einer Rastverbindung miteinander verbindbar sind. Nach dem Einklemmen der genannten Längskanten und Herstellung der Rastverbindung zwischen der Klemmleiste und dem Klemmkörper erfolgt durch Beaufschlagung des Heizdrahtes mit Spannung und/oder Strom die flüssigkeitsdichte Verschweißung der Klemmleiste mit den Längskanten der Kunststoffplatten oder Folien. Die Klemmleiste besitzt Rastelemente, insbesondere in Form von Haken oder dergleichen, welche zwischen die beabstandet angeordneten Längskanten der Platten oder Folien hindurchführbar sind und auf der Rückseite im Bereich des Betons verankert werden. Hierfür ist vorzugsweise auf der Rückseite der Kunststoffplatten oder Folien der Klemmkörper vorgesehen, welcher ebenso wie die Stege der Kunststoffplatten einbetoniert wird und nach dem Aufsetzen der Klemmleiste die Verankerung der Rastelemente ermöglicht. Der Klemmkörper weist hierfür zweckmäßig eine hinterschnittene Längsnut auf, in welche das oder die Rastelemente der Klemmleiste einrasten können. Alternativ kann die Verbindungsanordnung auch derart ausgebildet sein, daß der Klemmkörper die genannten Rastelemente aufweist und die auf der Vorderseite der Kunststoffplatten oder Folien angeordnete Klemmleiste korrespondierende Rastelemente besitzt, wobei die Rastelemente des Klemmkörpers zwischen den beabstandet angeordneten Längskanten der Platten oder Folien entsprechend hindurchführbar sind.

Die Verbindungsanordnung gelangt vor allem im Bereich von Betonschutzplatten zum Einsatz, doch kann sie ohne weiteres auch zur Verlegung von Deponieabdichtungen oder Anschlüssen von Folien in Betonbauwerken zum Einsatz gelangen. Desweiteren sei auf den Einsatz in mit Kunststoffplatten, insbesondere aus PE-HD ausgekleideten Kanalrohren mit begehbaren Durchmessern verwiesen. Die Verbindungsanordnung ermöglicht einen einfachen Einbau und eine schnelle, letztendlich kostengünstige Ausführung der Schweißverbindung. Auch kann die Verschweißung mittels des Sehweißgerätes automatisch protokolliert werden, wodurch in besonders zweckmäßiger Weise den Sicherheitsanforderungen und Auflagen der Anwender entsprochen werden kann.

Weiterbildungen und besondere Ausgestaltungen der Erfindung sind in den Unteransprüchen sowie der nachfolgenden Beschreibung angegeben.

Die Erfindung wird nachfolgend anhand des in der Zeichnung dargestellten Ausführungsbeispiels näher erläutert. Es zeigen:
- Fig. 1: eine explosionsartige Schnittdarstellung der Verbindungsanordnung,
- Fig. 2: die Verbindungsanordnung nach erfolgter Montage.

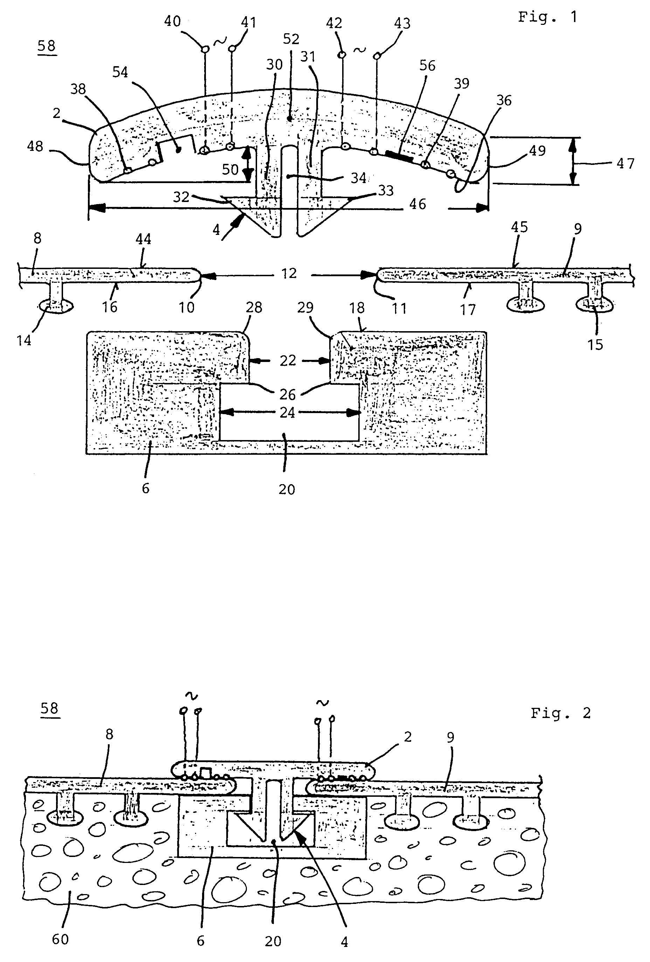

Fig. 1 zeigt in einer explosionsartigen Darstellung die Verbindungsanordnung, deren Leiste 2 mit ihren Rastelementen 4, einem Klemmkörper 6 zugeordnet jedoch mit diesem noch nicht verbunden ist. Es sind teilweise zwei Kunststoffplatten 8, 9 im Bereich ihrer Längskanten 10, 11 dargestellt, welche einen Abstand 12 zueinander aufweisen. Die Kunststoffplatten 8, 9 enthalten an ihren Rückseiten Verankerungsstege 14, 15, welche ebenso wie der Klemmkörper 6 einbetoniert werden und zur Verankerung der Kunststoffplatten 8, 9 im Beton dienen. Die Kunststoffplatten 8, 9 mit den Stegen 14, 15 werden in bekannter Weise durch Extrusion hergestellt und bestehen aus einem extrudierbaren, schweißbaren Kunststoff wie insbesondere aus PE-HD. Des weiteren bestehen die Klemmleiste 2 und vorzugsweise auch der Klemmkörper 6 aus dem gleichen Kunststoff.

Im eingebauten Zustand liegen die Kunststoffplatten 8, 9 mit ihren Rückseiten 16, 17 an der Oberfläche 18 des Klemmkörpers 6 an, so daß definierte Maße und Einbaubedingungen für die Klemmleiste 2 und insbesondere deren Rastelement 4 gewährleistet sind. Der Klemmkörper 6 besitzt eine hinterschnittene Längsnut 20 mit einer vorgegebenen Weite 22 im Bereich der genannten Oberfläche 18. Innen weist die Längsnut 20 eine vergrößerte Breite 24 auf, so daß im Übergangsbereich Rastnocken 26 vorhanden sind, welche vom Rastelement 4 der Klemmleiste 2 hintergriffen werden können. Um das Einführen des Rastelements 4 in die Längsnut 20 zu erleichtern, ist im Bereich der Oberfläche 18 ein abgerundeter Übergangsbereich 28 vorhanden.

Das Rastelement 4 der Klemmleiste 2 besitzt zwei Stege 30, 31, an deren zum Klemmkörper 6 weisenden Enden verbreiterte Rasthaken 32, 34 angeordnet sind. Zwischen den beiden Stegen 30, 31 befindet sich ein Spalt 34, welcher das Gegeneinanderdrücken der beiden Stege 30, 31 bzw. deren Rasthaken 32, 33 zuläßt.

Die Klemmleiste 2 enthält auf ihrer Unterseite 36 Heizdrähte 38, 39, an deren jeweils beiden Anschlüsse 40, 41 bzw. 42, 43 ein Schweißgerät angeschlossen werden kann, um den erforderlichen Schweißstrom durch den jeweiligen Heizdraht 38, 39 fließen zulassen. Die Klemmleiste erstreckt sich vor bzw. hinter die Zeichenebene und weist beispielsweise eine Gesamtlänge von 1,5 m auf. Die Heizdrähte 38, 39 sind bei der hier dargestellten Ausführungsform parallel zur Längserstreckung der Klemmleiste angeordnet, doch kann im Rahmen dieser Erfindung auch eine andere Konfiguration und Anordnung der Heizdrähte den Erfordernissen entsprechend vorgegeben sein. Die Heizdrähte 38, 39 sind unmittelbar in der Unterseite 36 angeordnet und verankert und werden beim Aufsetzen der Klemmleiste 2 auf die Vorderseiten 44, 45 unmittelbar mit diesen in Kontakt gebracht. Der Abstand 12 zwischen den Längskanten 10, 11 der beiden Kunststoffplatten 8, 9 sowie die Gesamtbreite 46 der Klemmleiste 2 sind in zweckmäßiger Weise derart aufeinander abgestimmt, daß die Heizdrähte 38, 39 nach dem Einrasten der Klemmleiste 2, vorzugsweise unter Vorspannung auf den genannten Vorderseiten 44, 45 der Kunststoffplatten 8, 9 aufliegen, so daß eine sichere Verschweißung gewährleistet ist. Die Klemmleiste 2 weist in zweckmäßiger Weise über die gesamte Breite 46 im wesentlichen die gleichbleibende Höhe 47 auf. Die Klemmleiste ist über ihre Gesamtbreite 46 durchgehend ausgebildet und ist somit das flüssigkeitsdichte Verbindungsstück zwischen den Längsrändern 10 und 11, welche von der Klemmleiste 2 derart überlappt werden, daß durch Elektroschweißen mittels der Drähte 38, 39 eine dichte Verbindung hergestellt wird. Es sei ausdrücklich darauf hingewiesen, daß in der explosionsartigen Darstellung gemäß Fig. 1 der Abstand 12 aus Gründen der Übersicht größer dargestellt ist als tatsächlich nach dem Einbetonieren der Kunststoffplatten 8, 9. So können die Längskanten 10, 11 in der Praxis ohne weiteres mit dem Übergangsbereich 28, 29 fluchten.

Von besonderer Bedeutung ist die definierte Wölbung der Klemmleiste 2 derart, daß die äußeren Enden 48, 49 der Klemmleiste 2 um einen vorgegebenen Abstand 50 tiefer als das Zentrum 52 der Klemmleiste 2 liegen. Vor dem Einbau und dem Festklemmen der Klemmleiste 2 ist ihre Unterseite 36 konkav gekrümmt. Nach dem Festklemmen der Klemmleiste 2 ist der Abstand 50 gegen Null, wobei aufgrund der Federelastizität des Kunststoffes der Klemmleiste 2 die für das ordnungsgemäße Verschweißen erforderliche Andruckkraft vorgegeben ist. Es sei an dieser Stelle festgehalten, daß vor dem Auflegen und Festklemmen der Klemmleiste die Kunststoffplatten 8, 9 in dem zu verschweißenden Bereich insbesondere durch Abziehen gereinigt und vorbereitet werden, damit Verunreinigungen oder eine Oxydationsschicht die Güte der Schweißnaht nicht nachteilig beeinflussen können.

An der Unterseite der Klemmleiste ist ferner ein Prüfkanal 54 vorgesehen, welcher sich über die gesamte Länge der Klemmleiste 2 erstreckt. Der Prüfkanal 54 ermöglicht nach dem Schweißen eine Überprüfung, und zwar insbesondere eine Vakuumprüfung. Ferner ist an der Unterseite 36 der Klemmleiste 2 in zweckmäßiger Weise ein elektrischer Leiter 56, insbesondere aus einem elektrisch leitfähigen Kunststoff, vorgesehen, welcher die Überprüfung der Schweißnaht ermöglicht. Der Prüfkanal 54 und ebenso der elektrische Leiter 56 sind bezüglich der Heizdrähte 38, 39 auf der "anderen Seite" wie der Außenraum 58 angeordnet, so daß nach dem Schweißen die zwischen dem Außenraum 58 und dem Prüfkanal 54 bzw. dem elektrischen Leiter 56 liegende Schweißnaht überprüft werden kann.

Fig. 2 zeigt die Verbindungsanordnung im eingebauten und verschweißten Zustand. Die beiden Kunststoffplatten 8, 9 sowie der Klemmkörper 6 sind im Beton 60 in bekannter Weise eingegossen und verankert. Der Klemmkörper 6 liegt unmittelbar an den Rückseiten 16, 17 der Kunststoffplatten 8, 9 im Bereich der Längskanten an. Ersichtlich wird somit verhindert, daß beim Betonieren der Raum zwischen den beabstandet angeordneten Längekanten 10, 11 der beiden Kunststoffplatten 8, 9 ausgefüllt wird. Die mittels des Rastelements 4 in der hinterschnittenen Längsnut 20 des Klemmkörpers 6 festgelegte und verankerte Klemmleiste 2 überlappt die beiden Kunststoffplatten 8, 9 im Bereich deren Längskanten 10, 11 derart, daß die Heizdrähte 38, 39 unmittelbar auf den Vorderseiten 44, 45 aufliegen. Die Klemmleiste 2 ist nun nicht mehr gewölbt, sondern sie liegt aufgrund der erfindungsgemäßen Dimensionierung und infolge ihrer Elastizität plan auf den Vorderseiten 44, 45 auf.

Durch die Erläuterung des Ausführungsbeispiels mit Kunststoffplatten bzw. Betonschutzplatten erfolgt keine Einschränkung der Erfindung. So sind die Verankerungsstege keine notwendige und zwingende Voraussetzung für die Erfindung. Anstelle der Kunststoffplatten können auch verschweißbare Kunststoffolien vorgesehen werden, welche in übereinstimmender Weise im Bereich ihrer Längskanten zwischen den Klemmkörper und die Klemmleiste eingespannt werden, um nachfolgend dicht und dauerhaft verschweißt zu werden. Ferner können die erläuterten Rastelemente statt auf der Klemmleiste entsprechend auf dem Klemmkörper angeordnet sein und korrespondierend die Klemmleister die hinterschnittende Längsnut aufweist. Maßgeblich ist, daß zunächst die Ränder der Kunststoffplatten oder Kunststoffolien zwischen den Klemmkörper und die Klemmleiste eingeklemmt werden und nachfolgend die flüssigkeitsdichte Verbindung mittels des Heizdrahtes hergestellt wird. Es versteht sich, daß für den jeweiligen Einsatzzweck die Rastelemente auf die Dicke der Kunststoffplatte bzw. Kunststoffolie oder dergleichen abgestimmt sind, damit letztere zuverlässig zwischen die Klemmleiste und den Klemmkörper eingeklemmt werden können und beim Elektroschweißen der erforderliche Anpreßdruck vorgegeben ist. Ferner kann der wenigstens eine Heizdraht auch auf dem Klemmkörper angeordnet sein. Mittels der Klemmleiste und des vorzugsweise in ein Betonbauwerk einbetonierten Klemmkörpers wird der zum Verschweißen der Längskanten erforderliche Anpreßdruck funktionssicher aufgebracht, so daß die dichte Schweißverbindung unabhängig von Montage- oder sonstigen Randbedingungen hergestellt werden kann. Mittels Klemmkörper und Klemmleiste wird ein definierter Anpreßdruck vorgegeben, welcher zumindest während der Verseheißung aufrecht erhalten wird. Der den Heizdraht aufnehmende Teil, sei es die Klemmleiste oder der Klemmkörper, bilden eine geschlossene, durchgehende Verbindung vom Rand der einen Kunststoffplatte oder Kunststoffolie zum Rand der anderen Kunststoffplatte oder Kunststoffolie.

### Bezugszeichen

- 2: Klemmleiste
- 4: Rastelement
- 6: Klemmkörper
- 8, 9: Kunststoffplatte
- 10, 11: Längskante
- 12: Abstand zwischen 10, 11
- 14, 15: Steg
- 16, 17: Rückseite von 8, 9
- 18: Oberfläche von 6
- 20: Längsnut in 6
- 22: Weite
- 24: Breite von 20
- 26: Rastnocken
- 28, 29: Übergangsbereich
- 30, 31: Steg von 4
- 32, 33: Rasthaken
- 34: Spalt
- 36: Unterseite von 2
- 38, 39: Heizdraht
- 40 - 43: Anschluß
- 46: Gesamtbreite von 2
- 47: Höhe/Dichte von 2
- 48, 49: äußeres Ende von 2
- 50: Abstand
- 52: Zentrum von 2
- 54: Prüfkanal
- 56: elektrische Leiter
- 58: Außenraum
- 60: Beton

## Patentansprüche

1. Verbindungsanordnung für Kunststoffplatten (8, 9) oder Kunststoffolien, welche im Bereich ihrer einander zugeordneten Längskanten (10, 11) durch Schweißen miteinander verbindbar sind, enthaltend einen insbesondere in Beton verankerbaren Körper (6), welcher sich in Richtung der Längskanten (10, 11) erstreckt und auf welchem die Kunststoffplatten (8, 9) mit ihren Rücksteiten (16, 17) im Bereich der Längskanten (10, 11) aufliegen,
dadurch gekennzeichnet, daß im Bereich der Längskanten (10, 11) auf den Vorderseiten (44, 45) der Kunststoffplatten (8, 9) oder Kunststoffolien eine Klemmleiste (2) angeordnet ist, welche mittels einer Rastverbindung mit dem als Klemmkörper ausgebildeten Körper (6) verbunden ist, und daß insbesondere die Klemmleiste (2) wenigstens einen Heizdraht (38, 39) aufweist, mittels welchem eine Elektroschweißverbindung mit den beiden Kunststoffplatten (8, 9) oder Kunststoffolien durchführbar ist.

2. Verbindungsanordnung nach Anspruch 1, dadurch gekennzeichnet, daß die Klemmleiste (2) ein Rastelement (4) aufweist, welches zwischen den beabstandet zueinander angeordneten Längskanten (10, 11) hindurchgeführt ist und in den Klemmkörper (6) eingreift oder umgekehrt.

3. Verbindungsanordnung nach Anspruch 1 oder 2, dadurch gekennzeichnet, daß die Klemmleiste (2) oder der Klemmkörper (6), welche den wenigstens einen Heizdraht (38, 39) enthalten, zwischen den Elektroschweißverbindungen im Bereich der Längskanten (10, 11) durchgehend und geschlossen ausgebildet sind.

4. Verbindungsanordnung nach einem der Ansprüche 1 bis 3, dadurch gekennzeichnet, daß der oder die Heizdrähte (38, 39), welche insbesondere an der Unterseite (36) des Klemmelements (2) angeordnet sind, nach dem Festklemmen auf den Vorderseiten (54, 55) der Kunststoffplatten (8, 9) bzw. Kunststoffolien vorzugsweise unter Vorspannung aufliegen.

5. Verbindungsanordnung nach Anspruch 1 oder 4, dadurch gekennzeichnet, daß die Klemmleiste (2) definiert gewölbt ausgebildet ist, wobei ihre Unterseite (36) vor dem Festklemmen konkav gewölbt ist und/oder daß die Klemmleiste aus einem federelastischen Kunststoff besteht und/oder daß die Klemmleiste (2) über ihre Breite (46) im wesentlichen eine gleichgroß bleibende Höhe (47) aufweist.

6. Verbindungsanordnung nach einem der Ansprüche 1 bis 5, dadurch gekennzeichnet, daß der Klemmkörper (6) eine hinterschnittene Längsnut (20) aufweist, in welche das Rastelement (4) der Klemmleiste (2) eingreift und/oder daß das Rastelement (4) zwei Stege (30, 31) aufweist, zwischen welchen ein Spalt (34) vorhanden ist, wobei beim Einführen des Rastelements (4) in die hinterschnittene Längsnut (20) die beiden Stege (30, 31) gegeneinander bewegbar sind.

7. Verbindungsanordnung, insbesondere nach einem der Ansprüche 1 bis 6, dadurch gekennzeichnet, daß die Klemmleiste (2) die beiden Kunststoffplatten (8, 9) bzw. Kunststoffolien im Bereich ihrer Längskanten (10, 11) überlappt, und/oder daß die Gesamtbreite (46) der Klemmleiste (2) größer ist als der Abstand (12) zwischen den Längskanten (10, 11).

8. Verbindungsanordnung nach einem der Ansprüche 1 bis 7, dadurch gekennzeichnet, daß die Klemmleiste (2) und/oder der Klemmkörper (6) sich über eine vorgegebene Länge entlang den Längskanten (10, 11) erstrecken.

9. Verbindungsanordnung, insbesondere nach einem der Ansprüche 1 bis 8, dadurch gekennzeichnet, daß an der Unterseite (36) der Klemmleiste (2) ein sieh in deren Längsrichtung erstreckender Prüfkanal (40) vorgesehen ist.

10. Verbindungsanordnung nach einem der Ansprüche 1 bis 9, dadurch gekennzeichnet, daß an der Unterseite (36) der Klemmleiste (2) ein elektrischer Leiter (56), insbesondere aus leitfähigem Kunststoff, angeordnet ist.
